# EUROPEAN PATENT APPLICATION

(11) **EP 4 318 721 A1**
(43) Date of publication of application: **07.02.2024**
(21) Application number: 21933691.4
(22) Date of filing: 30.03.2021
(51) Int. Cl.: H01M 10/0585

(54) **BATTERY AND ELECTRONIC DEVICE APPLYING SAME**

(71) Applicant: Ningde Amperex Technology Ltd., Ningde City, Fujian Province 352100 (CN)
(72) Inventor: ZENG, Qiao, Ningde City, Fujian 352100 (CN); YAN, Dongyang, Ningde City, Fujian 352100 (CN)
(74) Representative: Icosa
(86) International application number: PCT/CN2021/084157
(87) International publication number: WO 2022/205011

(57) **Abstract**

A battery is provided, including a housing, an insulation member, and a first active substance layer and a second active substance layer that have opposite polarities. The housing includes a first wall body, a second wall body, and a third wall body, the first wall body is a conductive wall body and disposed opposite to the third wall body, and the second wall body is connected to the first wall body and the third wall body to enclose an accommodating cavity in conjunction with the first wall body and the third wall body. The insulation member, the first active substance layer, and the second active substance layer are accommodated in the accommodating cavity. The second active substance layer is disposed on a surface of the first wall body that faces the third wall body. The first active substance layer is disposed between the second active substance layer disposed on the surface of the first wall body and the third wall body. The insulation member is disposed between the first active substance layer and the second active substance layer. The foregoing battery can make full use of space, thereby improving energy density. This application further provides an electronic apparatus using the foregoing battery.

## Description

### TECHNICAL FIELD

This application relates to the electrochemical field, and in particular, to a battery and an electronic apparatus using such battery.

### BACKGROUND

Lithium-ion batteries have been widely applied in the field of consumer electronics due to their advantages such as large specific energy, high working voltage, low self-discharge rate, a small size, and a light weight. However, with rapid development of electric vehicles and portable electronic devices, people have increasingly high demands for energy density of a battery.

### SUMMARY

In view of the foregoing situation, a battery with high energy density needs to be provided.

In addition, an electronic apparatus using such battery also needs to be provided.

This application provides a battery, including a housing, an insulation member, and a first active substance layer and a second active substance layer that have opposite polarities. The housing includes a first wall body, a second wall body, and a third wall body, the first wall body is conductive and disposed opposite to the third wall body, and the second wall body is connected to the first wall body and the third wall body to enclose an accommodating cavity in conjunction with the first wall body and the third wall body. The insulation member, the first active substance layer, and the second active substance layer are accommodated in the accommodating cavity. The second active substance layer is disposed on a surface of the first wall body that faces the third wall body. The first active substance layer is disposed between the second active substance layer and the third wall body. The insulation member is disposed between the first active substance layer and the second active substance layer.

In a solution of this application, the third wall body is a conductive wall body, the first active substance layer is disposed on a surface of the third wall body that faces the first wall body, and the third wall body is insulated from the first wall body.

In a solution of this application, the insulation element is disposed between the third wall body and the second wall body.

In a solution of this application, the battery further includes a first electrode plate and a second electrode plate that are accommodated in the accommodating cavity; the first electrode plate includes a first current collector and the first active substance layer disposed on a surface of the first current collector, and the second electrode plate includes a second current collector and the second active substance layer disposed on a surface of the second current collector; and the first electrode plate is disposed between the first wall body and the third wall body, and the second electrode plate is disposed between the first electrode plate and the third wall body.

In a solution of this application, the first current collector is electrically connected to the third wall body through a first conductive member, and the first conductive member is insulated from the second electrode plate. The first wall body is electrically connected to the second current collector through a second conductive member, and the second conductive member is insulated from the first electrode plate; or the first wall body is electrically connected to the second current collector through the conductive second wall body, and the second wall body is insulated from the first electrode plate.

In a solution of this application, the first conductive member penetrates through the second electrode plate in a first direction, and an insulation material is disposed between the first conductive member and the second electrode plate.

In a solution of this application, the first conductive member is a hollow cylinder with sealed ends.

In a solution of this application, the insulation member is disposed between the first electrode plate and the second wall body.

In a solution of this application, the third wall body is a conductive wall body, and the second active substance layer is further disposed on a surface of the third wall body that faces the first wall body; and the battery further includes a first electrode plate accommodated in the accommodating cavity, and the first electrode plate includes a first current collector and the first active substance layer disposed on a surface of the first current collector.

In a solution of this application, the battery further includes a first conductive member, the first current collector is electrically connected to the first conductive member, the first conductive member is extended from the third wall body, and the first conductive member is insulated from the third wall body; and the first wall body is electrically connected to the third wall body through the conductive second wall body, and the second wall body is insulated from the first electrode plate.

In a solution of this application, the first conductive member penetrates through the third wall body in a first direction, and an insulation material is disposed between the first conductive member and the third wall body.

In a solution of this application, the battery further includes a second electrode plate and a third electrode plate that are accommodated in the accommodating cavity. The second electrode plate includes a second current collector and the second active substance layer disposed on a surface of the second current collector, and the third electrode plate includes a third current collector and the first active substance layer disposed on a surface of the third current collector. The second electrode plate is disposed between the first electrode plate and the first wall body, and the third electrode plate is disposed between the second electrode plate and the first wall body. The first conductive member is electrically connected to the third current collector and insulated from the second electrode plate, and the second wall body is electrically connected to the second electrode plate. The second wall body is insulated from the third electrode plate.

In a solution of this application, the battery further includes a first electrode plate accommodated in the accommodating cavity, the first electrode plate includes a first current collector and the first active substance layer disposed on a surface of the first current collector; and the first electrode plate is separated from the third wall body, the first current collector is electrically connected to the first conductive member, the first conductive member is extended from the third wall body, and the first conductive member is insulated from the third wall body.

In a solution of this application, the battery further includes a second electrode plate accommodated in the accommodating cavity, and the second electrode plate includes a second current collector and the second active substance layer disposed on a surface of the second current collector. The second electrode plate is disposed between the first electrode plate and the third wall body, the second electrode plate is separated from the third wall body, and the first conductive member is insulated from the second electrode plate. The second current collector is electrically connected to the first wall body through a second conductive member, and the second conductive member is insulated from the first electrode plate; or the second current collector is electrically connected to the first wall body through the conductive second wall body, and the second wall body is insulated from the first electrode plate.

In a solution of this application, the insulation member includes at least one of a separator, a gel electrolyte, or a solid electrolyte.

This application provides an electronic apparatus, where the electronic apparatus includes the foregoing battery.

In the battery in this application, because the second active substance layer is provided on the first wall body, that is, the first wall body serves as a current collector, the housing and internal space thereof are fully used, thereby helping improve energy density of the battery and making the battery thinner.

### BRIEF DESCRIPTION OF DRAWINGS

FIG. 1 is a schematic structural diagram of a battery according to an embodiment of this application;
FIG. 2 is a schematic cross-sectional view of a battery in a direction II-II according to an embodiment of this application;
FIG. 3a is a schematic cross-sectional view of a battery according to an embodiment of this application;
FIG. 3b is a schematic partial exploded view of a battery according to an embodiment of this application;
FIG. 3c is a schematic cross-sectional view of a battery according to an embodiment of this application;
FIG. 4 is a schematic cross-sectional view of a battery according to an embodiment of this application;
FIG. 5a is a schematic cross-sectional view of a battery according to an embodiment of this application;
FIG. 5b is a schematic partial exploded view of a battery according to an embodiment of this application;
FIG. 6 is a schematic cross-sectional view of a battery according to an embodiment of this application;
FIG. 7 is a schematic cross-sectional view of a battery according to an embodiment of this application;
FIG. 8 is a schematic cross-sectional view of a battery according to an embodiment of this application;
FIG. 9 is a schematic cross-sectional view of a battery according to an embodiment of this application;
FIG. 10 is a schematic cross-sectional view of a battery according to an embodiment of this application;
FIG. 11 is a schematic cross-sectional view of a battery according to an embodiment of this application; and
FIG. 12 is a schematic structural diagram of an electronic apparatus according to an embodiment of this application.

### Reference signs of main components:

| | |
|---|---|
| Batteries | 100, 100a, 100b, 100c, 100d, 100e, 100f, 100g, 100h, and 100i |
| Housing | 10 |
| Insulation member | 20 |
| First active substance layers | 30, 513, and 553 |
| Second active substance layers | 40, 533, and 533a |
| First wall body | 11 |
| Second wall body | 13 |
| Third wall body | 15 |
| Accommodating cavity | 101 |
| Surfaces | 110 and 150 |
| Insulation element | 17 |
| First electrode plates | 51, 51a, and 51b |
| Second electrode plates | 53, 53a, and 53b |
| First conductive members | 61, 61a, and 61b |
| Insulation materials | 612, 632, 612a, and 632a |
| First current collectors | 511, 511a, and 511b |
| Second current collectors | 531, 531a, and 531b |
| Second conductive members | 63, 63a, 63b, and 63c |
| Third electrode plate | 55 |
| Third current collector | 551 |
| Electronic apparatus | 200 |

This application is further described in the following specific embodiments with reference to the accompanying drawings.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application.

Unless otherwise defined, all technical and scientific terms used herein shall have the same meanings as those commonly understood by a person skilled in the art to which this application pertains. The terms used herein in this specification of this application are only used to describe specific embodiments, but are not intended to limit this application.

The following describes in detail some embodiments of this application with reference to the accompanying drawings. In absence of conflicts, the following embodiments and features in the embodiments may be combined.

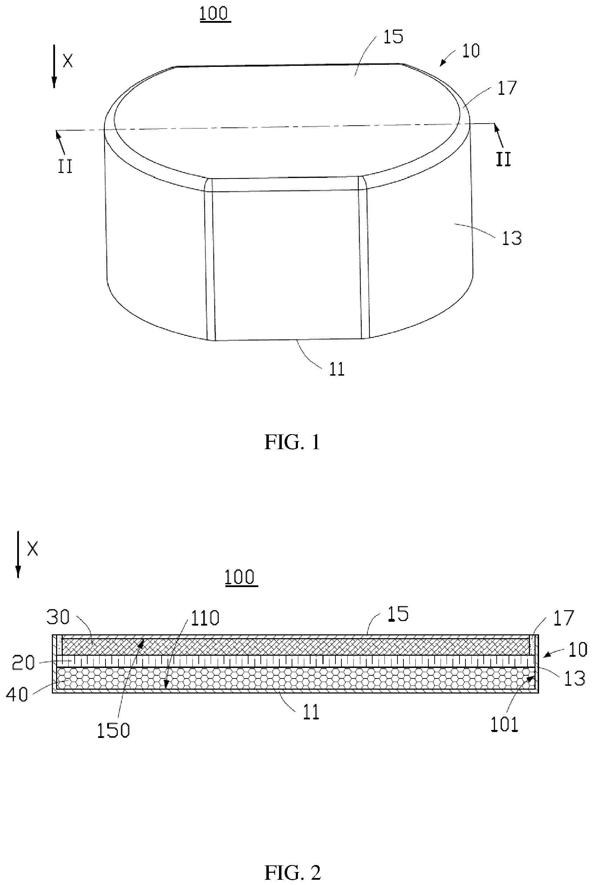

Referring to FIG. 1 and FIG. 2, in an embodiment of this application, a battery 100 includes a housing 10, an insulation member 20, a first active substance layer 30, and a second active substance layer 40. The battery 100 may be, but is not limited to, a button cell.

The housing 10 includes a first wall body 11, a second wall body 13, and a third wall body 15. The first wall body 11 is conductive, and the third wall body 15 and the first wall body 11 are opposite each other and spaced apart. The second wall body 13 is connected to the first wall body 11 and the third wall body 15 to enclose a sealed accommodating cavity 101 in conjunction with the first wall body 11 and the third wall body 15.

In an embodiment, the conductive first wall body 11 may include a material with a conductive property. In an embodiment, the first wall body 11 may include a metal material. In an embodiment, the first wall body 11 may include a conductive polymer.

The insulation member 20, the first active substance layer 30, and the second active substance layer 40 are accommodated in the accommodating cavity 101. The second active substance layer 40 is disposed on a surface 110 of the first wall body 11 that faces the third wall body 15. The first active substance layer 30 and the second active substance layer 40 have opposite polarities, and the first active substance layer 30 is disposed between the third wall body 15 and the second active substance layer 40 that is disposed on the surface 110 of the first wall body 11. The insulation member 20 is disposed between the first active substance layer 30 and the second active substance layer 40.

In an embodiment, a material of the insulation member 20 includes at least one of a polymer material with ion conductivity, a lithium-ion compound, an oxide, and a hydroxide.

The polymer material may be, but is not limited to, one or more of polyvinylidene fluoride-hexafluoropropene (PVDF-HFP), polyvinylidene fluoride (PVDF), polyacrylonitrile (PAN), polymethyl methacrylate (PMMA), polyphenylene oxide (PPO), polypropylene carbonate (PPC), polyethylene oxide (PEO), and a derivative of the preceding substances.

The lithium-ion compound may be selected from, but is not limited to, at least one of lithium phosphate (Li₃PO₄), lithium titanium phosphate (LiₓTi_{y}(PO₄)₃, where 0<x<2 and 0<y<3), lithium aluminum titanium phosphate (LiₓAl_{y}Ti_{z}(PO₄)₃, where 0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), lithium lanthanum titanate (LiₓLa_{y}TiO₃, where 0<x<2 and 0<y<3), lithium germanium thiophosphate (LiₓGe_{y}P_{z}S_{w}, where 0<x<4, 0<y<1, 0<z<1, and 0<w<5), lithium nitride (LiₓN_{y}, where 0<x<4 and 0<y<2), SiS₂ glass (LiₓSi_{y}S_{z}, where 0≤x<3, 0<y<2, and 0<z<4), P₂S₅ glass (LiₓP_{y}S_{z}, where 0≤x<3, 0<y<3, and 0<z<7), Li₂O, LiF, LiOH, Li₂CO₃, LiAlO₂, Li₂O-A1₂O₃-SiO₂-P₂O₅-TiO₂-GeO₂ ceramics, or garnet ceramics (Li₃₊ₓLa₃M₂O12, where 0≤x≤5, and M is Te, Nb, or Zr).

The oxide may be selected from, but is not limited to, at least one of HfO₂, SrTiO₃, SnO₂, CeO₂, MgO, NiO, CaO, BaO, ZnO, ZrO₂, Y₂O₃, Al₂O₃, TiO₂, SiO₂, or the like.

The hydroxide may be selected from, but is not limited to, at least one of boehmite, magnesium hydroxide, aluminum hydroxide, or the like.

In an embodiment, the insulation member 20 may be at least one of a separator, a gel electrolyte, or a solid electrolyte. The gel electrolyte and the solid electrolyte are common types of electrolytes in the battery field and are not limited herein.

The first active substance layer 30 may be a positive electrode active substance layer or a negative electrode active substance layer. In an embodiment, the first active substance layer 30 is a positive electrode active substance layer that includes a positive electrode active material; and the second active substance layer 40 is a negative electrode active substance layer that includes a negative electrode active material. In an embodiment, the first active substance layer 30 is a negative electrode active substance layer that includes a negative electrode active material; and the second active substance layer 40 is a positive electrode active substance layer that includes a positive electrode active material.

The positive electrode active material may include, but is not limited to, one or more of lithium cobalt oxide, lithium nickel cobalt manganate, lithium nickel cobalt aluminate, lithium manganate oxide, lithium manganese iron phosphate, lithium vanadium phosphate, lithium vanadyl phosphate, lithium iron phosphate, lithium titanate, and a lithium-rich manganese-based material.

The negative electrode active material may include, but is not limited to, one or more of artificial graphite, natural graphite, soft carbon, hard carbon, graphene, carbonaceous mesophase spherule, a silicon-based material, a tin-based material, lithium titanate, or another metal capable of forming an alloy with lithium.

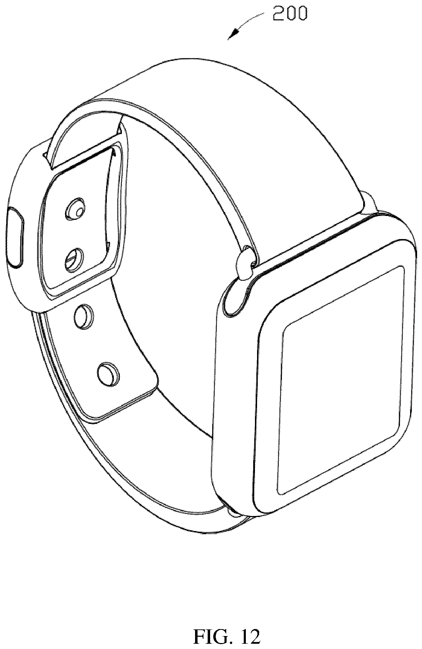

Referring to FIG. 12, the foregoing battery is applied to an electronic apparatus 200, to supply power to the electronic apparatus 200. The electronic apparatus 200 may be, but is not limited to, a wearable device (such as a watch), a mobile phone, a toy, a drone, and the like.

The following further describes the battery by using embodiments. An example in which the second active substance layer is a negative electrode active substance layer and the first active substance layer is a positive electrode active substance layer is used for description.

### Embodiment 1

Referring to FIG. 2, the third wall body 15 is a conductive wall body. The first active substance layer 30 is disposed on a surface 150 of the third wall body 15 that faces the first wall body 11. The first wall body 11 is insulated from the third wall body 15. The third wall body 15, the first active substance layer 30, the second active substance layer 40, and the first wall body 11 are stacked in a first direction X. The first direction X is a direction in which the third wall body 15 faces the first wall body 11 or a direction in which the first wall body 11 faces the third wall body 15. In some embodiments, the first direction X may be a thickness direction of a battery.

Specifically, in this embodiment, an insulation element 17 may be provided along a periphery of the third wall body 15, and the insulation element 17 is connected to the third wall body 15 and the second wall body 13, to insulate the first wall body 11 from the third wall body 15. In this case, the second wall body 13 may be conductive or non-conductive, and the second wall body 13 and the first wall body 11 may be directly or indirectly connected. For example, the first wall body 11 and the second wall body 13 may be integrally formed.

In an embodiment, the insulation element 17 may include an insulation adhesive, and the insulation adhesive is filled between the third wall body 15 and the second wall body 13.

In an embodiment, the third wall body 15 may include a material with a conductive property. In an embodiment, the third wall body 15 may include a metal material. In an embodiment, the third wall body 15 may include a conductive polymer.

A projection of the first active substance layer 30 in the first direction X onto a plane perpendicular to the first direction X is within a projection of the second active substance layer 40 in the first direction X onto a plane perpendicular to the first direction X.

When a battery 100 is applied to an electronic apparatus, the first wall body 11 and the third wall body 15 are respectively electrically connected to two electrical connection ends (not shown in the figure) of the electronic apparatus, to supply power to the electronic apparatus.

### Embodiment 2

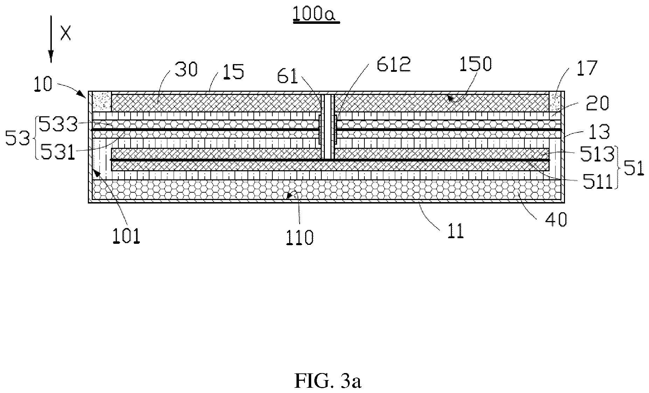

Referring to FIG. 3a, a difference from Embodiment 1 is that a battery 100a may further include a first electrode plate 51 and a second electrode plate 53 that have opposite polarities and that are accommodated in the accommodating cavity 101. The first electrode plate 51 and the first active substance layer 30 have a same polarity, and the first electrode plate 51 is disposed between the first active substance layer 30 on the surface 150 of the third wall body 15 and the second active substance layer 40 on the surface 110 of the first wall body 11. The second electrode plate 53 and the first active substance layer 30 disposed on the surface 150 of the third wall body 15 have opposite polarities, and the second electrode plate 53 is disposed between the first electrode plate 51 and the first active substance layer 30 disposed on the surface 150 of the third wall body 15.

The insulation members 20 are disposed between the first electrode plate 51 and the second active substance layer 40 disposed on the surface 110 of the first wall body 11, between the first electrode plate 51 and the second electrode plate 53, and between the second electrode plate 53 and the first active substance layer 30 disposed on the surface 150 of the third wall body 15. In this embodiment, the first electrode plate 51 may be enveloped by the insulation member 20, that is, the insulation member 20 is also disposed between the first electrode plate 51 and the second wall body 13.

The battery 100a further includes a first conductive member 61, the first electrode plate 51 and the third wall body 15 are electrically connected through the first conductive member 61, and the first conductive member 61 is insulated from the second electrode plate 53. In this embodiment, the first conductive member 61 may be insulated from the second electrode plate 53 through an insulation material 612. In some embodiments, the first conductive member 61 and the second electrode plate 53 may be spaced apart to implement insulation.

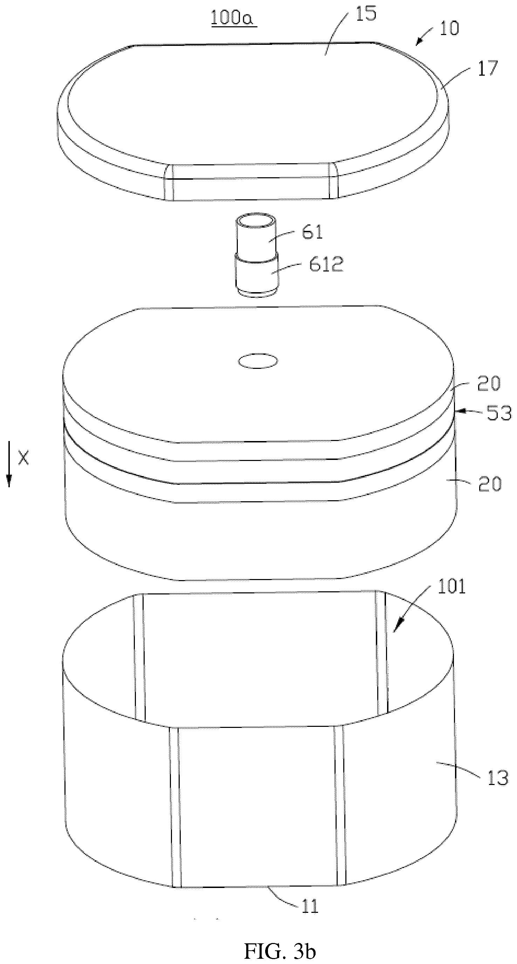

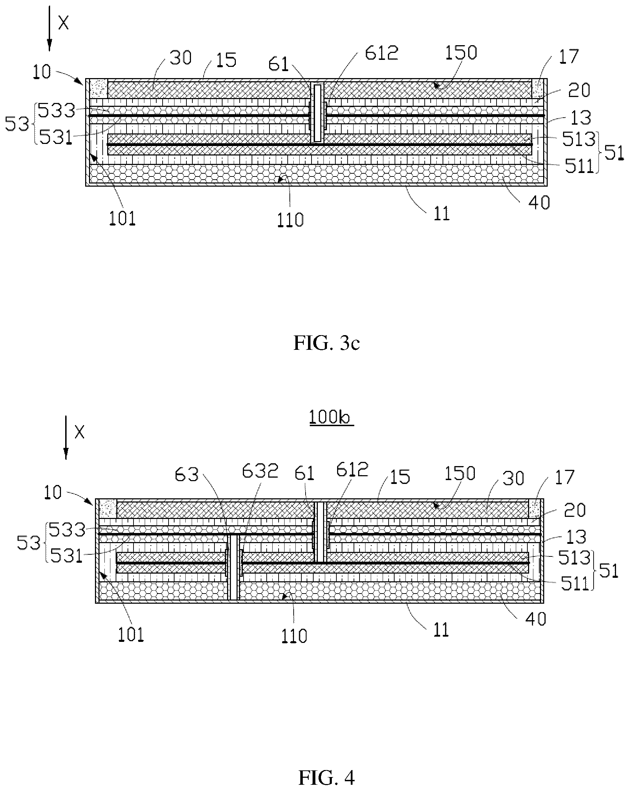

A morphology of the first conductive member 61 is not limited, and may be any morphology such as a solid cylinder, a hollow cylinder, or a sheet. In this embodiment, the first conductive member 61 is a hollow cylinder, and two ends of the first conductive member 61 that are spaced apart in the first direction X may be penetrated through (as shown in FIG. 3a) or sealed (as shown in FIG. 3c). In this embodiment, as shown in FIG. 3b, the first conductive member 61 may penetrate through the second electrode plate 53, and the two ends of the first conductive member 61 that are spaced apart in the first direction X are respectively electrically connected to the first electrode plate 51 and the third wall body 15. The insulation material 612 may sleeve or be applied on the first conductive member 61, to insulate the first conductive member 61 from the second electrode plate 53. The first conductive member 61 in a hollow cylinder shape helps reduce overall mass of the battery, thereby helping increase energy density of the battery. The first conductive member 61 with two ends sealed helps increase a contact area between the first conductive member and a current collector or an external terminal electrically connected to the two ends of the first conductive member, thereby facilitating stability of electrical connection. In some embodiments, the insulation material 612 may be, but is not limited to, an insulation adhesive tape or an insulation coating. In some embodiments, the insulation coating may include a ceramic material.

The second wall body 13 is a conductive wall body, the first electrode plate 51 is insulated from the second wall body 13, and the second electrode plate 53 is electrically connected to the second wall body 13. In this embodiment, the first electrode plate 51 and the second wall body 13 are spaced apart to implement insulation, and the second electrode plate 53 comes into direct contact with the second wall body 13 to implement electrical connection. The first wall body 11 is electrically connected to the second electrode plate 53 through the second wall body 13.

In an embodiment, the second wall body 13 may include a material with a conductive property. In an embodiment, the second wall body 13 may include a metal material. In an embodiment, the second wall body 13 may include a conductive polymer.

Specifically, the first electrode plate 51 may include a first current collector 511 and first active substance layers 513 disposed on a surface of the first current collector 511 that faces the first wall body 11 and on a surface of the first current collector 511 that faces the third wall body 15. The second electrode plate 53 may include a second current collector 531 and second active substance layers 533 disposed on a surface of the second current collector 531 that faces the first wall body 11 and on a surface of the second current collector 531 that faces the third wall body 15.

A projection of the first active substance layer 513 in a first direction X onto a plane perpendicular to the first direction X is within a projection of the second active substance layer 533 in the first direction X onto a plane perpendicular to the first direction X, and is within a projection of the second active substance layer 40 in the first direction X onto a plane perpendicular to the first direction X.

When the battery 100a is applied to an electronic apparatus, one electrical connection terminal of the electronic apparatus is electrically connected to the first wall body 11 or the second wall body 13, and the other electrical connection terminal is electrically connected to the third wall body 15, so that the battery 100a supplies power to the electronic apparatus.

### Embodiment 3

Referring to FIG. 4, a difference from Embodiment 2 is that the second wall body 13 may be non-conductive. A battery 100b further includes a second conductive member 63, the first wall body 11 and the second electrode plate 53 are electrically connected through the second conductive member 63, and the second conductive member 63 is respectively insulated from the first electrode plate 51 and a third wall body 15. In this embodiment, insulation between the second conductive member 63 and the first electrode plate 51 and between the second conductive member 63 and the third wall body 15 may be implemented through an insulation material 632. A morphology of the second conductive member 63 may be the same as or different from that of the first conductive member 61. For example, in this embodiment, the second conductive member 63 is a hollow cylinder, and two ends of the second conductive member 63 that are spaced apart in the first direction X penetrate through. The second conductive member 63 penetrates through the first electrode plate 51, and the two ends of the second conductive member that are spaced apart in the first direction X are respectively electrically connected to the second current collector 531 and the first wall body 11. The insulation material 632 may sleeve or be applied on the second conductive member 63, to insulate the second conductive member 63 from the first electrode plate 51. In some embodiments, the insulation material 632 may be, but is not limited to, an insulation adhesive tape or an insulation coating.

When the battery 100b is applied to an electronic apparatus, one electrical connection terminal of the electronic apparatus is electrically connected to the first wall body 11, and the other electrical connection terminal is electrically connected to the third wall body 15, so that the battery 100b supplies power to the electronic apparatus.

### Embodiment 4

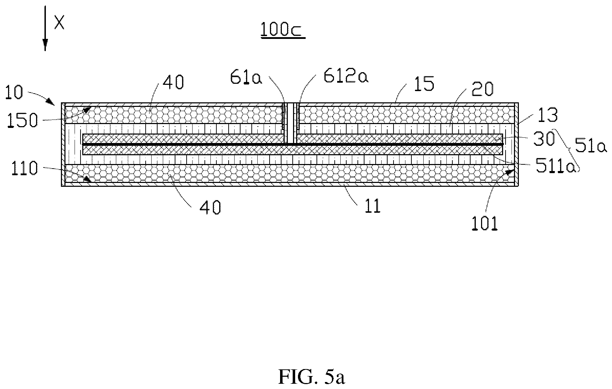

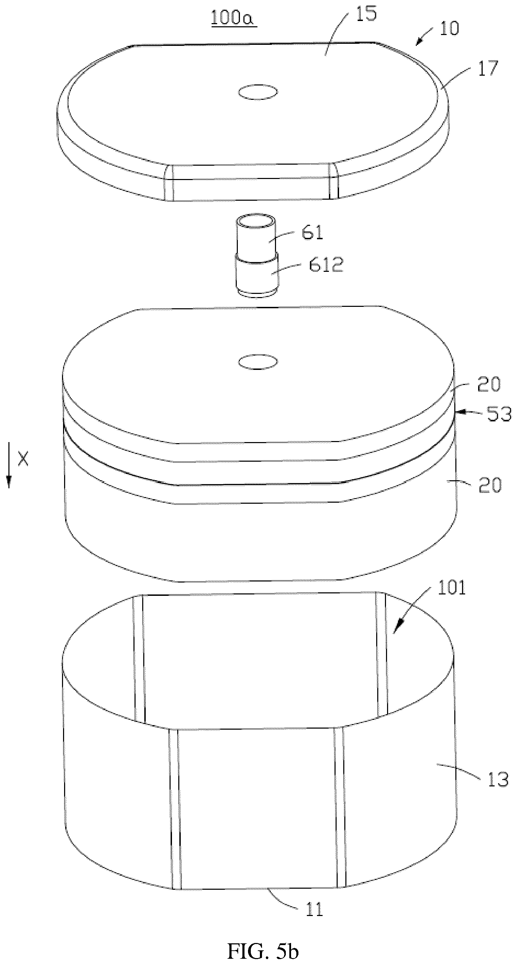

Referring to FIG. 5a and FIG. 5b, the third wall body 15 is a conductive wall body. The second active substance layer 40 is further disposed on the surface 150 of the third wall body 15 that faces the first wall body 11. The first direction X is a direction in which the third wall body 15 faces the first wall body 11 or a direction in which the first wall body 11 faces the third wall body 15. In some embodiments, the first direction X may be a thickness direction of a battery.

The battery 100c includes a first electrode plate 51a accommodated in an accommodating cavity 101. The first electrode plate 51a is located between the second active substance layer 40 disposed on the surface 110 of the first wall body 11 and the second active substance layer 40 disposed on the surface 150 of the third wall body 15. The first electrode plate 51a includes a first current collector 511a and the foregoing first active substance layer 30, and the first active substance layer 30 is disposed on a surface of the first current collector 511a. Specifically, the first active substance layer 30 is disposed on a surface of the first current collector 511a that faces the first wall body 11 and on a surface of the first current collector 511a that faces the third wall body 15.

Insulation members 20 are disposed between the first electrode plate 51a and the second active substance layer 40 disposed on the surface 110 of the first wall body 11, and between the first electrode plate 51a and the second active substance layer 40 disposed on the surface 150 of the third wall body 15. In this embodiment, the first electrode plate 51a may be enveloped by the insulation member 20.

The battery 100c further includes a first conductive member 61a, and the first electrode plate 51a is electrically connected to the first conductive member 61a. The first conductive member 61a protrudes or is extended from the third wall body 15 (that is, the first conductive member 61a penetrates through the third wall body 15), and the first conductive member 61a is insulated from the third wall body 15. In this embodiment, the first conductive member 61a may be insulated from the third wall body 15 through an insulation material 612a. Specifically, the first conductive member 61a is a hollow cylinder, and of two ends of the first conductive member that are spaced apart in a first direction X, one end is electrically connected to the first current collector 511a, and the other end penetrates through the third wall body 15 and protrudes from the third wall body 15. The insulation material 612a may sleeve or be applied on the first conductive member 61a, to insulate the first conductive member 61a from the third wall body 15. In some embodiments, the insulation material 612a may be, but is not limited to, an insulation adhesive tape or an insulation coating.

The second wall body 13 is a conductive wall body, the second wall body 13 is separately electrically connected to the first wall body 11 and the third wall body 15, and the second wall body 13 is insulated from the first electrode plate 51a. In this embodiment, the second wall body 13 separately comes into contact with the first wall body 11 and the third wall body 15 to implement the electrical connection.

In an embodiment, the first wall body 11, the second wall body 13, and the third wall body 15 each may include a material with a conductive property. In an embodiment, the first wall body 11, the second wall body 13, and the third wall body 15 each may include a metal material. In an embodiment, the first wall body 11, the second wall body 13, and the third wall body 15 each may include a conductive polymer.

A projection of the first active substance layer 30 disposed on the surface of the first current collector 511a in the first direction X onto a plane perpendicular to the first direction X is within a projection of the second active substance layer 40 disposed on the surface 110 of the first wall body 11 in the first direction X onto a plane perpendicular to the first direction X, and is within a projection of the second active substance layer 40 disposed on the surface 150 of the third wall body 15 in the first direction X onto a plane perpendicular to the first direction X.

When the battery 100c is applied to an electronic apparatus, one electrical connection terminal of the electronic apparatus is electrically connected to the first wall body 11, the second wall body 13, or the third wall body 15, and the other electrical connection terminal is electrically connected to the first conductive member 61a, so that the battery 100c supplies power to the electronic apparatus.

### Embodiment 5

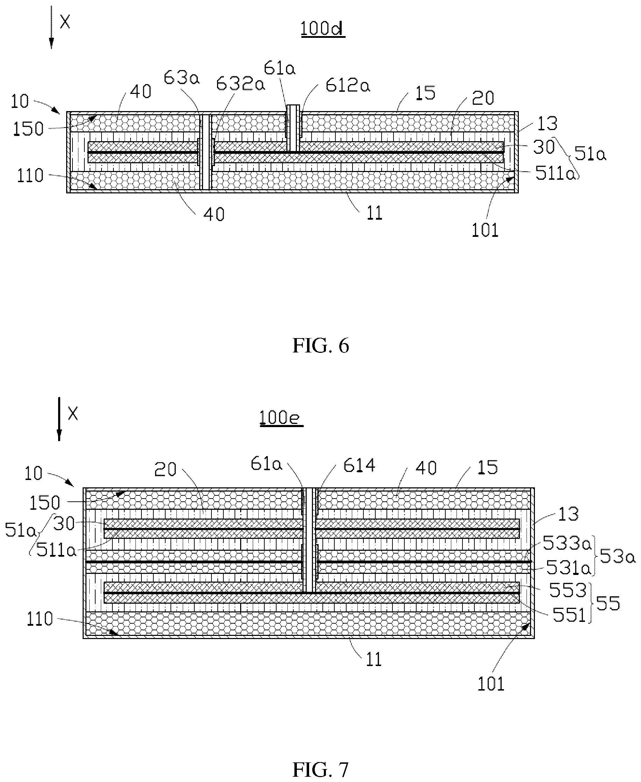

Referring to FIG. 6, a difference from Embodiment 4 is that an end of a first conductive member 61 farther away from a first current collector 511a is extended from the third wall body 15. A battery 100d further includes a second conductive member 63a, a first wall body 11 and a third wall body 15 are electrically connected through the second conductive member 63a, and the second conductive member 63a is insulated from a first electrode plate 51a. In this embodiment, the second conductive member 63a may be insulated from the first electrode plate 51a through an insulation material 632a.

Specifically, the second conductive member 63a is a hollow cylinder and penetrates through the first electrode plate 51a, and two ends of the second conductive member 63a that are spaced apart in a first direction X are respectively electrically connected to the first wall body 11 and the third wall body 15. The insulation material 632a may sleeve or be applied on the second conductive member 63a, to insulate the second conductive member 63a from the first electrode plate 51a. In some embodiments, the insulation material 632a may be, but is not limited to, an insulation adhesive tape or an insulation coating.

### Embodiment 6

Referring to FIG. 7, a difference from Embodiment 4 is that a battery 100e may further include a second electrode plate 53a that has an opposite polarity to the first electrode plate 51a and that is accommodated in the accommodating cavity 101, and a third electrode plate 55 that has a same polarity as the first electrode plate 51a and that is accommodated in the accommodating cavity 101.

The second electrode plate 53a is located between the first electrode plate 51a and the second active substance layer 40 disposed on the surface 110 of the first wall body 11, and the third electrode plate 55 is located between the second electrode plate 53a and the second active substance layer 40 disposed on the surface 110 of the first wall body 11.

The insulation members 20 are located between the first electrode plate 51a and the second active substance layer 40 disposed on the surface 150 of the third wall body 15, between the first electrode plate 51a and the second electrode plate 53a, between the second electrode plate 53a and the third electrode plate 55, and between the third electrode plate 55 and the second active substance layer 40 disposed on the surface 110 of the first wall body 11. In this embodiment, the third electrode plate 55 may be enveloped by the insulation member 20.

Each second wall body 13 is also electrically connected to the second electrode plate 53a, and the second wall body 13 is also insulated from the third electrode plate 55. The second electrode plate 53a includes a second current collector 531a and a second active substance layer 533a disposed on a surface of the second current collector 531a. The third electrode plate 55 includes a third current collector 551 and a first active substance layer 553 disposed on a surface of the third current collector 551. In this embodiment, the second wall body 13 comes into contact with the second current collector 531a in the second electrode plate 53a to implement electrical connection.

The first conductive member 61a is also electrically connected to the third electrode plate 55, and the first conductive member 61a is insulated from the second electrode plate 53a. In this embodiment, the first conductive member 61a may be insulated from the second electrode plate 53a through an insulation material 614. Specifically, the first conductive member 61a is a hollow cylinder and penetrates through the first electrode plate 51a and the second electrode plate 53a. Of two ends of the first conductive member 61a that are spaced apart in the first direction X, one end is electrically connected to the third current collector 551, and the other end penetrates through the third wall body 15 and protrudes from the third wall body 15. Two insulation materials 614 may alternately cover or be applied on the first conductive member 61a, to insulate the first conductive member 61a from the second electrode plate 53a and insulate the first conductive member 61a from the third wall body 15. In some embodiments, the insulation material 614 may be, but is not limited to, an insulation adhesive tape or an insulation coating.

A projection of the first active substance layer 30 disposed on the surface of the first current collector 511a in the first direction X onto a plane perpendicular to the first direction X is also within a projection of the second active substance layer 533a disposed on the surface of the second current collector 531a in the first direction X onto a plane perpendicular to the first direction X.

A projection of the first active substance layer 553 disposed on the surface of the third current collector 551 in the first direction X onto a plane perpendicular to the first direction X is within a projection of the second active substance layer 40 disposed on the surface 110 of the first wall body 11 in the first direction X onto a plane perpendicular to the first direction X, is within a projection of the second active substance layer 40 disposed on the surface 150 of the third wall body 15 in the first direction X onto a plane perpendicular to the first direction X, and is also within a projection of the second active substance layer 533a disposed on the surface of the second current collector 531a in the first direction X onto a plane perpendicular to the first direction X.

### Embodiment 7

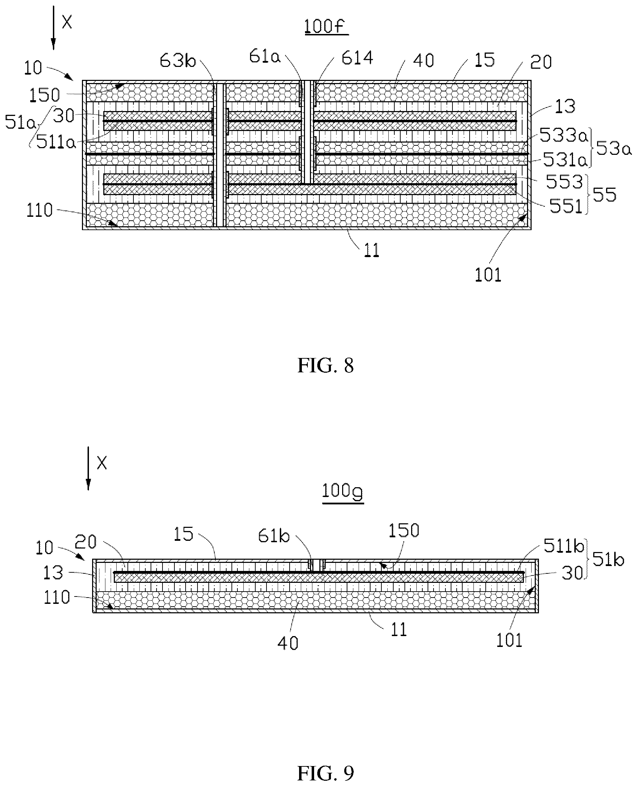

Referring to FIG. 8, a difference from Embodiment 6 is that the second wall body 13 may be non-conductive. A battery 100f further includes a second conductive member 63b, the first wall body 11, the second electrode plate 53a, and the third wall body 15 are electrically connected through the second conductive member 63b, and the second conductive member 63b is separately insulated from the first electrode plate 51a and the third electrode plate 55. Specifically, the second conductive member 63b is a hollow cylinder and penetrates through the first electrode plate 51a, the second electrode plate 53a, and the third electrode plate 55. Two ends of the second conductive member 63b that are spaced apart in the first direction X are respectively electrically connected to the first wall body 11 and the third wall body 15. Two insulation materials (not marked in the figure) may alternately cover or be applied on the second conductive member 63b, to insulate the second conductive member 63b from the first electrode plate 51a and insulate the second conductive member 63b from the third electrode plate 55. In some embodiments, the insulation material may be, but is not limited to, an insulation adhesive tape or an insulation coating.

When the battery 100f is applied to an electronic apparatus, one electrical connection terminal of the electronic apparatus is electrically connected to the first wall body 11 or the third wall body 15, and the other electrical connection terminal is electrically connected to the first conductive member 61a, so that the battery 100f supplies power to the electronic apparatus.

### Embodiment 8

Referring to FIG. 9, a battery 100g includes a first electrode plate 51b accommodated in an accommodating cavity 101. The first electrode plate 51b is located between the second active substance layer 40 disposed on the surface 110 of the first wall body 11 and the third wall body 15, and the first electrode plate 51b is separated from the third wall body 15. In this embodiment, the first electrode plate 51b is separated from the second wall body 13. In this case, the second wall body 13 and the third wall body 15 may be separately conductive or non-conductive, and the second wall body 13 may be separately directly or indirectly connected to the first wall body 11 and the third wall body 15. The first direction X is a direction in which the third wall body 15 faces the first wall body 11 or a direction in which the first wall body 11 faces the third wall body 15. In some embodiments, the first direction X may be a thickness direction of the battery.

The first electrode plate 51b includes a first current collector 511b and the foregoing first active substance layer 30, and the first active substance layer 30 is disposed on a surface of the first current collector 511b that faces the first wall body 11.

The insulation member 20 is disposed between the first electrode plate 51b and the second active substance layer 40 disposed on the surface 110 of the first wall body 11. In this embodiment, the insulation member 20 may also be disposed between the first electrode plate 51b and the third wall body 15. The insulation member 20 may also be disposed between the first electrode plate 51b and the second wall body 13.

The battery 100g further includes a first conductive member 61b, and the first electrode plate 51b is electrically connected to the first conductive member 61b. The first conductive member 61b protrudes or is extended from the third wall body 15, and the first conductive member 61b is insulated from the third wall body 15. Specifically, the first conductive member 61b is a hollow cylinder, and of two ends of the first conductive member that are spaced apart in the first direction X, one end is electrically connected to the first current collector 511b, and the other end penetrates through the third wall body 15 and protrudes from the third wall body 15. The insulation material (not marked in the figure) may sleeve or be applied on the first conductive member 61b, to insulate the first conductive member 61b from the third wall body 15. In some embodiments, the insulation material may be, but is not limited to, an insulation adhesive tape or an insulation coating.

A projection of the first active substance layer 30 disposed on the surface of the first current collector 511b in the first direction X onto a plane perpendicular to the first direction X is within a projection of the second active substance layer 40 disposed on the surface 110 of the first wall body 11 in the first direction X onto a plane perpendicular to the first direction X.

When the battery 100g is applied to an electronic apparatus, one electrical connection terminal of the electronic apparatus is electrically connected to the first wall body 11, and the other electrical connection terminal is electrically connected to the first conductive member 61b, so that the battery 100g supplies power to the electronic apparatus.

### Embodiment 9

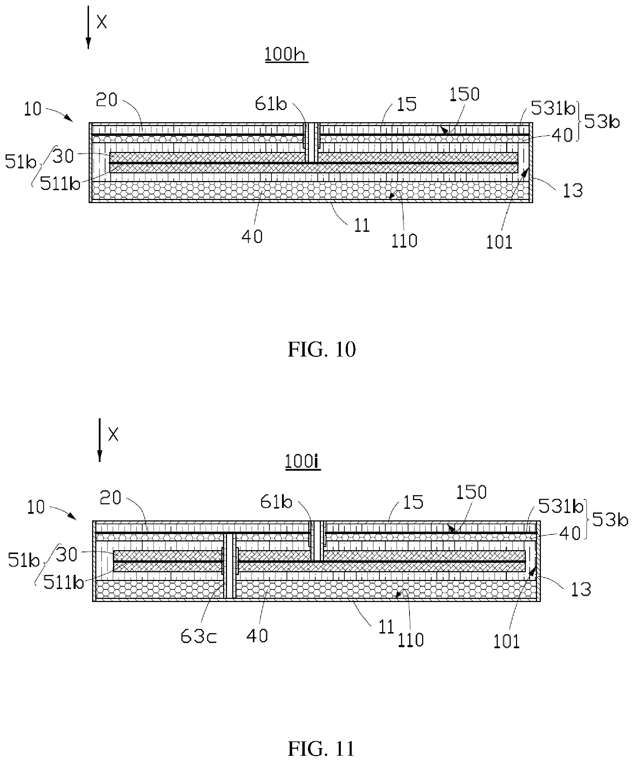

Referring to FIG. 10, a difference from Embodiment 8 is that a battery 100h further includes a second electrode plate 53b that has an opposite polarity to a first electrode plate 51b and that is accommodated in an accommodating cavity 101. The second electrode plate 53b is disposed between the first electrode plate 51b and the third wall body 15, and the second electrode plate 53b is separated from the third wall body 15.

The first active substance layer 30 is further disposed on a surface of the first current collector 511b that faces the second electrode plate 53b. The second electrode plate 53b includes a second current collector 531b and a second active substance layer 40 disposed on a surface of the second current collector 531b that faces the first electrode plate 51b.

The insulation member 20 is further disposed between the first electrode plate 51b and the second electrode plate 53b. The first conductive member 61b is further insulated from the second electrode plate 53b.

The second wall body 13 is a conductive wall body, and is respectively electrically connected to the first wall body 11 and the second current collector 531b of the second electrode plate 53b. The second wall body 13 is insulated from the first electrode plate 51b. In this embodiment, the second wall body 13 respectively comes into direct contact with the first wall body 11 and the second current collector 531b of the second electrode plate 53b. The first conductive member 61b is further insulated from the second electrode plate 53b. Specifically, the first conductive member 61b is a hollow cylinder and penetrates through the second electrode plate 53b. The insulation material (not marked in the figure) may sleeve or be applied on the first conductive member 61b, to insulate the first conductive member 61b from the second electrode plate 53b and insulate the first conductive member 61b from the third wall body 15. In some embodiments, the insulation material may be, but is not limited to, an insulation adhesive tape or an insulation coating.

In an embodiment, the second wall body 13 may include a material with a conductive property. In an embodiment, the second wall body 13 may include a metal material. In an embodiment, the second wall body 13 may include a conductive polymer.

A projection of the first active substance layer 30 disposed on the surface of the first current collector 511b in the first direction X onto a plane perpendicular to the first direction X is also within a projection of the second active substance layer 40 disposed on a surface of the second current collector 531b in the first direction X onto a plane perpendicular to the first direction X.

When the battery 100h is applied to an electronic apparatus, one electrical connection terminal of the electronic apparatus is electrically connected to the first wall body 11 or the second wall body 13, and the other electrical connection terminal is electrically connected to the first conductive member 61b, so that the battery 100h supplies power to the electronic apparatus.

### Embodiment 10

Referring to FIG. 11, a difference from Embodiment 9 is that the second wall body 13 may be non-conductive. A battery 100i further includes a second conductive member 63c, the first wall body 11 and the second electrode plate 53b are electrically connected through the second conductive member 63c, and the second conductive member 63c is insulated from the first electrode plate 51b. Specifically, the second conductive member 63c is a hollow cylinder and penetrates through the first electrode plate 51b, and two ends of the second conductive member 63c that are spaced apart in the first direction X are respectively electrically connected to the first wall body 11 and the second current collector 531b. The insulation material (not marked in the figure) may sleeve or be applied on the second conductive member 63c, to insulate the second conductive member 63c from the first electrode plate 51b. In some embodiments, the insulation material may be, but is not limited to, an insulation adhesive tape or an insulation coating.

When the battery 100i is applied to an electronic apparatus, one electrical connection terminal of the electronic apparatus is electrically connected to the first wall body 11, and the other electrical connection terminal is electrically connected to the first conductive member 61b, so that the battery 100i supplies power to the electronic apparatus.

It can be understood that, in this application, the number of electrode plates in the accommodating cavity 101 of the battery can be adjusted as needed, and is not exhaustively listed in this application.

In the battery in this application, because the second active substance layer 40 is provided on the first wall body 11, that is, the first wall body 11 serves as a current collector, the housing 10 and internal space thereof are fully used, thereby helping improve energy density of the battery and making the battery thinner. In addition, the second active substance layer 40 or the first active substance layer 30 is provided on the third wall body 15, to further improve the energy density of the battery.

In addition, a person of ordinary skill in the art may make various other corresponding changes and variations based on the technical idea of this application, but all these changes and variations shall fall within the protection scope of the claims of this application.

## Claims

1. A battery, comprising a housing, wherein the housing comprises a first wall body, a second wall body, and a third wall body, the first wall body is conductive and disposed opposite to the third wall body, and the second wall body is connected to the first wall body and the third wall body to enclose an accommodating cavity in conjunction with the first wall body and the third wall body;
and
the battery further comprises an insulation member, and a first active substance layer and a second active substance layer that have opposite polarities, wherein the insulation member, the first active substance layer, and the second active substance layer are accommodated in the accommodating cavity;
the second active substance layer is disposed on a surface of the first wall body that faces the third wall body;
the first active substance layer is disposed between the second active substance layer and the third wall body; and
the insulation member is disposed between the first active substance layer and the second active substance layer.

2. The battery according to claim 1, **characterized in that** the third wall body is a conductive wall body, the first active substance layer is disposed on a surface of the third wall body that faces the first wall body, and the third wall body is insulated from the first wall body.

3. The battery according to claim 2, **characterized in that** an insulation element is disposed between the third wall body and the second wall body.

4. The battery according to claim 2, **characterized in that** the battery further comprises a first electrode plate and a second electrode plate that are accommodated in the accommodating cavity;
the first electrode plate comprises a first current collector and the first active substance layer disposed on a surface of the first current collector, and the second electrode plate comprises a second current collector and the second active substance layer disposed on a surface of the second current collector; and
the first electrode plate is disposed between the first wall body and the third wall body, and the second electrode plate is disposed between the first electrode plate and the third wall body.

5. The battery according to claim 4, **characterized in that** the first current collector is electrically connected to the third wall body through a first conductive member, and the first conductive member is insulated from the second electrode plate; and
the first wall body is electrically connected to the second current collector through a second conductive member, and the second conductive member is insulated from the first electrode plate; or the first wall body is electrically connected to the second current collector through the conductive second wall body, and the second wall body is insulated from the first electrode plate.

6. The battery according to claim 5, **characterized in that** the first conductive member penetrates through the second electrode plate in a first direction, and an insulation material is disposed between the first conductive member and the second electrode plate.

7. The battery according to claim 5, **characterized in that** the first conductive member is a hollow cylinder with sealed ends.

8. The battery according to claim 5, **characterized in that** the insulation member is disposed between the first electrode plate and the second wall body.

9. The battery according to claim 1, **characterized in that** the third wall body is a conductive wall body, and the second active substance layer is further disposed on a surface of the third wall body that faces the first wall body; and
the battery further comprises a first electrode plate accommodated in the accommodating cavity, and the first electrode plate comprises a first current collector and the first active substance layer disposed on a surface of the first current collector.

10. The battery according to claim 9, **characterized in that** the battery further comprises a first conductive member, the first current collector is electrically connected to the first conductive member, the first conductive member is extended from the third wall body, and the first conductive member is insulated from the third wall body; and
the first wall body is electrically connected to the third wall body through the conductive second wall body, and the second wall body is insulated from the first electrode plate.

11. The battery according to claim 10, **characterized in that** the first conductive member penetrates through the third wall body in a first direction, and an insulation material is disposed between the first conductive member and the third wall body.

12. The battery according to claim 10, **characterized in that** the battery further comprises a second electrode plate and a third electrode plate that are accommodated in the accommodating cavity;
the second electrode plate comprises a second current collector and the second active substance layer disposed on a surface of the second current collector, and the third electrode plate comprises a third current collector and the first active substance layer disposed on a surface of the third current collector;
the second electrode plate is disposed between the first electrode plate and the first wall body, and the third electrode plate is disposed between the second electrode plate and the first wall body; and
the first conductive member is electrically connected to the third current collector and insulated from the second electrode plate, and the second wall body is electrically connected to the second current collector and insulated from the third electrode plate.

13. The battery according to claim 1, **characterized in that** the battery further comprises a first electrode plate accommodated in the accommodating cavity, wherein the first electrode plate comprises a first current collector and the first active substance layer disposed on a surface of the first current collector; and
the first electrode plate is separated from the third wall body, the first current collector is electrically connected to the first conductive member, the first conductive member is extended from the third wall body, and the first conductive member is insulated from the third wall body.

14. The battery according to claim 13, **characterized in that** the battery further comprises a second electrode plate accommodated in the accommodating cavity, the second electrode plate comprises a second current collector and the second active substance layer disposed on a surface of the second current collector, the second electrode plate is disposed between the first electrode plate and the third wall body, the second electrode plate is separated from the third wall body, and the first conductive member is insulated from the second electrode plate; and
the second current collector is electrically connected to the first wall body through a second conductive member, and the second conductive member is insulated from the first electrode plate; or the second current collector is electrically connected to the first wall body through the conductive second wall body, and the second wall body is insulated from the first electrode plate.

15. The battery according to claim 1, **characterized in that** the insulation member comprises at least one of a separator, a gel electrolyte, or a solid electrolyte.

16. An electronic apparatus, **characterized in that** the electronic apparatus comprises the battery according to any one of claims 1 to 15.
